# EUROPÄISCHE PATENTANMELDUNG

(11) **EP 1 785 313 A2**
(43) Veröffentlichungstag der Anmeldung: **16.05.2007**
(21) Anmeldenummer: 06123364.9
(22) Anmeldetag: 02.11.2006
(51) Int. Cl.: B60P 3/08

(54) **Hubarm sowie Transportfahrzeug, insbesondere Autotransportfahrzeug, mit einem solchen Hubelement**

(30) Priorität: 11.11.2005 DE 102005054325
(71) Anmelder: Schneebichler, Michael Hermann Leonard, 4893 Zell am Moos (AT)
(72) Erfinder: Schneebichler, Michael Hermann Leonard, 4893 Zell am Moos (AT)
(74) Vertreter: von Ahsen, Erwin-Detlef

(57) **Zusammenfassung**

Die Erfindung betrifft einen Hubarm für ein Transportfahrzeug mit einer in ihrer Höhe und/oder Neigung verstellbare Ladeebene (21), insbesondere Autotransportfahrzeug, mit wenigstens zwei verschieblich in einander geführten Hubelementen (10, 11), wobei das eine Hubelement (10) schwenkbar an einer Basis (20) angebracht ist. Um den konstruktiven Aufbau eines solchen Hubarmes und damit auch des Transportfahrzeuges, an welchen er angebracht ist, zu vereinfachen, ist der erfindungsgemäße Hubarm dadurch gekennzeichnet, daß das andere Hubelement (11) aufgrund der Schwenkbewegung des einen Hubelementes (10) ein- und ausfahrbar ist.

## Beschreibung

Die Erfindung betrifft einen Hubarm für ein Transportfahrzeug mit einer in ihrer Höhe und/oder Neigung verstellbaren Ladeebene, insbesondere Autotransportfahrzeug, mit wenigstens zwei verschieblich ineinander geführten Hubelementen. Des weiteren betrifft die Erfindung ein Transportfahrzeug, insbesondere Autotransporter, mit einem solchen Hubarm.

Ein solcher Hubarm ist aus der DE 692 07 817 T2 bekannt.

Autotransporter bestehen in der Regel aus einem Motorwagen und einem Anhänger. Sowohl der Motorwagen, als auch der Anhänger verfügen über zwei übereinander angeordnete Ladeebenen für die zu transportierenden Fahrzeuge. Die obere Ladeebene kann zum Teil vollständig auf die untere Ladeebene abgesenkt werden. Dieses wird insbesondere dann eingesetzt, wenn höhere Fahrzeuge, welche nicht zwischen die untere und obere Ladeebene passen oder bei einem Beladen auf die obere Ladeebene zu einer Überschreitung der maximal zulässigen Höhe des beladenden Autotransporters führen würden, zu transportieren sind. Insbesondere am Anhänger läßt sich aber auch die obere Ladeebene verschwenken, nämlich der in Fahrtrichtung des Fahrzeugs gesehen hintere Teil absenken. Die obere Ladeebene bildet so eine Rampe zum Beladen der oberen Ladeebene des Motorfahrzeugs. Auch wird die obere Ladeebene des Anhängers in dieser rampenartigen Stellung beladen und dann in die eigentliche Transportstellung geschwenkt.

Während am Motorwagen die obere Ladeebene meist in aufrechten Säulen geführt und mittels Spindeltrieben in der Höhe und/oder ihrer Neigung verstellt wird, haben sich in der Praxis am Anhänger Hubarme durchgesetzt. Dabei werden in der Praxis im wesentlichen sogenannte Scherenhubarme eingesetzt, bei denen ein erstes Hubelement schwenkbar an der unteren Ladeebene (Basis) und mit dem gegenüberliegenden Ende gelenkig mit der oberen Ladeebene verbunden ist. Etwa mittig greift an dieses erste Hubelement ein weiteres Hubelement an. Dieses ist an einem Ende gelenkig mit dem ersten Hubelement verbunden. Das Ende des anderen Hubelementes ist in der Ebene der unteren Ladeebene (horizontaler Ebene) verschieblich geführt. Das erste Hubelement und das zweiten Hubelement bilden demnach ein auf dem Kopf stehendes "Y". Das in der horizontalen Ebene verschieblich geführte Ende des anderen Hubelementes wird mittels eines Druckmittelzylinders in der horizontalen Ebene verschoben, wodurch das erste Hubelement aufgerichtet bzw. abgesenkt wird. Nachteilig bei diesem Hubelement ist, daß die Hubhöhe der oberen Ladeebene durch die Länge der unteren Führung begrenzt ist. In der Praxis lassen sich mit Scherenhubarmen nur Durchfahrtshöhen zwischen erster und zweiter Ladeebene von 1800 bis 2000 mm erreichen. Ferner ist an der unteren Führung eine manuelle oder pneumatisch betätigte Verriegelung für den Hubarm erforderlich.

Weiterhin sind aus der Praxis sogenannte teleskopierbare Hubarme bekannt. Bei diesen teleskopierbaren Hubarmen ist ein Druckmittelzylinder schwenkbar an der unteren Ladeebene (Basis) angebracht, und zwar mit seinem Zylinderrohr. Eine Kolbenstange des Druckmittelzylinders ist an der oberen Ladeebene angelenkt. Links und rechts (in Fahrtrichtung gesehen) der Ladeebenen sind je ein getrennter Hydraulikzylinder angeordnet, die voneinander getrennt sind. Sie werden über eine gemeinsame Welle geschwenkt, während gleichzeitig die Kolbenstange aus- oder eingefahren wird, je nach dem, ob die obere Ladeebene abgesenkt oder angehoben werden soll. Nachteilig bei den teleskopierbaren Hubarmen ist, daß sie nicht mehr oder nur mit sehr hohem Aufwand mechanisch verriegelbar sind. Derzeit wird die Verriegelung über Hydraulikzylinder mit eingebauter Verrieglung bereitgestellt. Diese Verriegelungszylinder sind allerdings problematisch, da deren Verschleiß nicht mehr erkennbar ist. Erst in einem Schadensfall, wenn sich nämlich die obere Ladeebene infolge verschlissener Verriegelungen absenkt und dadurch Fahrzeuge auf der unteren Ladeebene beschädigt werden, wird der Verschleiß erkennbar. Außerdem sind Hydraulikzylinder mit eingebauter Verriegelung teuer. Ferner muß die Schwenkbewegung des Hydraulikzylinders sowie die Ein- und Ausfahrbewegung der Kolbenstange synchronisiert werden. Dabei ist auch noch die Ein- und Ausfahrbewegung der linken und der rechten Kolbenstange zu synchronisieren, so daß in Summe ein doppelter Synchronisationsaufwand erforderlich ist.

Bei dem aus der DE 692 07 817 T2 bekannten Hubarm, welcher den oben genannten Scherengestellen sehr ähnlich ist, wird die Ein- und Ausfahrbewegung des anderen Hubelementes über ein gesondertes, drittes Hubelement gesteuert. Hierdurch ergibt sich wieder ein komplizierter Aufbau, der zudem eine hohe Anzahl von Verschleißteilen aufweist.

Hiervon ausgehend liegt der Erfindung das Problem zugrunde, einen Hubarm und ein Transportfahrzeug der eingangs genannten Art derart weiterzubilden, daß der konstruktive Aufbau des Hubarms und seine Betätigung vereinfacht ist und mit wenigen Verschleißteilen auskommt.

Zur Lösung dieses Problems ist der erfindungsgemäße Hubarm und das erfindungsgemäße Transportfahrzeug dadurch gekennzeichnet, daß das andere Hubelement aufgrund der Schwenkbewegung des einen Hubelementes ein- und ausfahrbar ist.

Erfindungsgemäß wird demnach die Ein- und Ausfahrbewegung der ineinander verschieblich geführten Hubelemente zwangsweise mit der Schwenkbewegung des schwenkbar an der Basis angebrachten Hubelementes gekoppelt. Die Schwenkbewegung dieses schwenkbar an der Basis angebrachten Hubelementes steuert also auch die Ein- und Ausfahrbewegung der verschieblich ineinander geführten Hubelemente. Hierdurch entfällt der Aufwand für eine Synchronisation dieser Bewegungen, was auch zu einer Reduzierung der erforderlichen Bauteile führen kann. Insbesondere wird die Zahl der Verschleißteile reduziert. Auch entfällt eine Synchronisation der Ein- und Ausfahrbewegung des linken und des rechten Hubarms, da beide an die gemeinsam durchgeführte Schwenkbewegung gekoppelt sind.

Ein besonders einfacher konstruktiver Aufbau ergibt sich dann, wenn das ein- und ausfahrbare Hubelement mittels einer Kurvenscheibe aus dem ersten Hubelement ein- und ausfahrbar ist. Durch die Kurvenscheibe wird beim Aufschwenken (Aufrichten) des schwenkbaren Hubelements automatisch das ein- und ausfahrbare Hubelement ausgefahren. Wird das schwenkbare Hubelement wieder zurückgeschwenkt, fährt das ein- und ausfahrbare Hubelement aufgrund der Gewichtskraft, insbesondere durch die obere Ladeebene, entlang der Kurvenscheibe wieder ein. Ferner ermöglicht die Kurvenscheibe eine freie Gestaltung der Ein- und Ausfahrbewegung in Abhängigkeit der Schwenkbewegung, so daß diese optimal nach den jeweiligen Erfordernissen aufeinander abgestimmt werden können. Insbesondere beim Anheben von Lasten, wie zum Beispiel der oberen Ladeebene eines Autotransporters, kann es sinnvoll sein, während einer Anfangsphase der Schwenkbewegung keine oder nur eine sehr kleine Ausfahrbewegung vorzusehen und erst in der letzten Phase die eigentliche Ausfahrbewegung, wenn nur noch ein vergleichsweise kleiner Winkel zwischen der Längsachse des Hubarms und der Richtung der Gewichtskraft wirkt, auszuführen. Dieses hält den Hebelarm auf den Hubarm und damit das zum Schwenken des Hubarms erforderliche Antriebsmoment klein (günstige Krafteinleitung). Aber auch hier ist es möglich, eine Zwangsführung mittels einer entsprechenden Kulissenbahn in einer Kurvenscheibe vorzusehen. Alternativ sind aber auch andere geeignete Getriebeelemente, beispielsweise Hebeltriebe geeignet.

Wie bereits eingangs dargelegt, besteht ein weiteres Problem mit dem Hubarmen des Standes der Technik in der aufwendigen und zum Teil infolge von Verschleiß unzuverlässigen Verriegelung des Hubarms in der oberen Position. Zur Lösung dieses Problems ist nach einer Weiterbildung der Erfindung vorgesehen, daß das ein- und ausfahrbare Hubelement über einen Todpunkt der Hubmechanik, also insbesondere der Kurvenscheibe beim Aufrichten des Hubarmes bewegt wird. Der ein- und ausfahrbare Hubarm wird also aufgrund der Kurvenbahn der Kurvenscheibe beim Aufrichten des Hubarms zunächst ausgefahren. Kurz vor Erreichen der aufgerichteten Endstellung des Hubarms überschreitet der ein- und ausfahrbare Hubarm einen oberen Todpunkt der Kurvenbahn und sackt leicht in das schwenkbare Hubelement zurück, wird also geringfügig wieder eingefahren. Der Hubarm ist nun in der aufgerichteten Stellung arretiert. Alternativ kann das andere (ein- und ausfahrbare) Hubelement formschlüssig mittels Rastmitteln in seiner jeweiligen Stellung arretierbar sein.

Die Erfindung wird nachfolgend anhand eines in der Zeichnung dargestellten Ausführungsbeispiels näher erläutert. In dieser zeigen:
- Fig. 1: ein erstes Ausführungsbeispiel für einen Hubarm mit den Erfindungsmerkmalen im Längsschnitt,
- Fig. 2: ein zweites Ausführungsbeispiel für einen Hubarm mit den Erfindungsmerkmalen im Längsschnitt,
- Fig. 3: ein weiteres Ausführungsbeispiel für einen Hubarm mit den Erfindungsmerkmalen im Längsschnitt,
- Fig. 4: einen Teil eines Autotransporters mit einem Hubarm gemäß einer der Fig. 1 bis 3 in perspektivischer Draufsicht,
- Fig. 5: den Teil des Autotransporters gemäß Fig. 4 in Rückansicht,
- Fig. 6: einen Hubarm gemäß einer der Fig. 1 bis 3 in Seitenansicht mit oberer Ladeebene in nach unten geschwenktem Zustand,
- Fig. 7: den Hubarm gemäß Fig. 6 in teilweise aufgerichteter Stellung,
- Fig. 8: den Hubarm gemäß Fig. 6 in vollständig aufgerichteter Stellung.

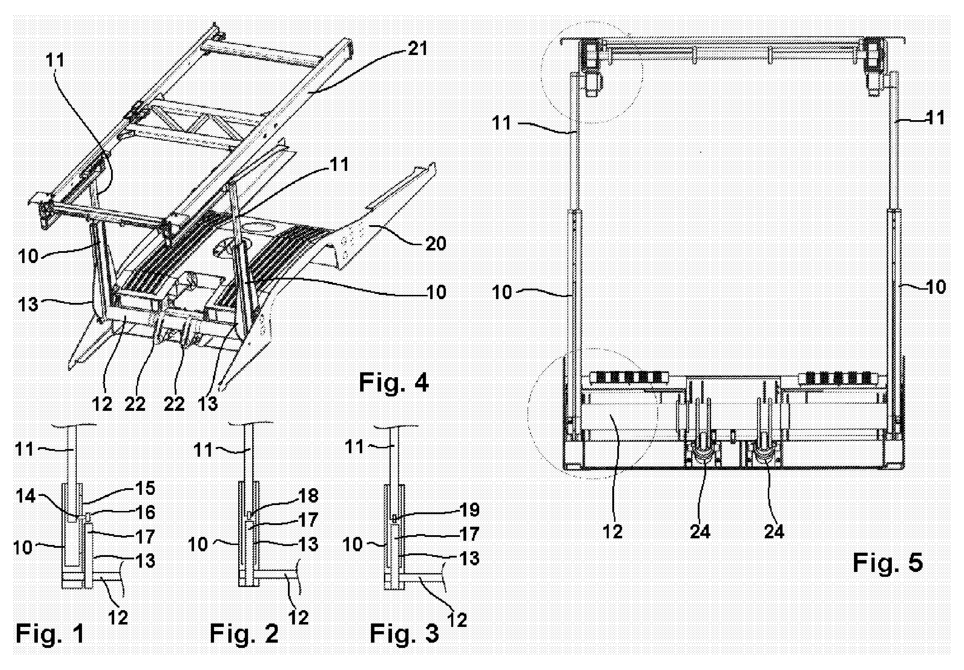

Den in Fig. 1 bis 3 gezeigten Hubarmen ist gemeinsam, daß sie ein erstes Hubelement 10 und ein verschieblich in diesem Hubelement 10 geführtes zweites Hubelement 11 aufweisen. Das erste Hubelement 10 ist unverdrehbar an einer Welle 12 angebracht und gemeinsam mit der Drehung der Welle 12 um ihre Längsachse verschwenkbar.

Dem Hubarm ist eine Kurvenscheibe 13 zugeordnet, welche fest steht und nicht zusammen mit dem ersten Hubelement 10 bzw. dem Hubarm verschwenkt wird. Die Kurvenscheibe 13 wirkt so mit dem zweiten, ein- und ausfahrbaren Hubelement 11 zusammen, daß ein Verschwenken des ersten, schwenkbaren Hubelements 10 ein Ein- und Ausfahren des ein- und ausfahrbaren Hubelementes 11 bewirkt. Dieses ist in Fig. 1 dadurch gelöst, daß die Kurvenscheibe 12 parallel zur Schwenkebene des schwenkbaren Hubelements 10 außerhalb des schwenkbaren Hubelementes 10 angeordnet ist. Eine Achse 14 im Bereich des der Welle 12 zugewandten Endes des ein- und ausfahrbaren Hubelementes 11 ist durch einen Schlitz 15 im schwenkbaren Hubelement 10 geführt und trägt an seinem freien Ende eine Rolle 16. Die Rolle 16 rollt beim Verschenken des schwenkbaren Hubelements 10 auf einer äußeren Kurvenbahn 17 der Kurvenscheibe 13 ab und bewirkt, entsprechend der Kontur der Kurvenbahn 17, ein Ein- und Ausfahren des zweiten Hubelementes 11.

Der Hubarm gemäß Fig. 2 unterscheidet sich vom Hubarm gemäß Fig. 1 dadurch, daß er gleichsam eine innen liegende Kurvenscheibe 13 aufweist, welche innerhalb des schwenkbaren Hubelementes 10 liegt. Das ein- und ausfahrbare Hubelement 11 weist an seinem der Welle 12 zugewandten Ende eine Rolle 18 auf, welche auf der Kurvenbahn 17 in der Kurvenscheibe 13 abrollt. Im übrigen arbeitet der Hubarm gemäß Fig. 2 ebenso, wie der Hubarm gemäß Fig. 1.

Fig. 3 zeigt einen Hubarm, der dem Hubarm gemäß Fig. 2 sehr ähnlich ist und ebenfalls eine innen liegende Kurvenscheibe 13 aufweist. Anstelle der Rolle 18 weist das ein- und ausfahrbare Hubelement 11 an seiner der Welle 12 zugewandten Seite einen Gleitstein 19 auf. Der Gleitstein 19 gleitet auf der Kurvenbahn 17 der Kurvenscheibe 13. Die Gleitfläche des Gleitsteins 19, mit der er auf der Kurvenbahn 17 gleitet ist zur Erhöhung der Verschleißfestigkeit gehärtet. Ebenso kann auch die Kurvenbahn 17 zur Erhöhung ihrer Verschleißfestigkeit gehärtet sein. Gegenüber den Rollen 16 bzw. 18 hat der Gleitstein 19 den Vorteil, daß sich eine größere Berührfläche zwischen seiner Gleitfläche und der Kurvenbahn 17 ergibt.

Zusätzlich zu den in Fig. 1 bis 3 dargestellten Ausführungsbeispielen sind auch weitere Abwandlungen, beispielsweise Kombinationen aus den einzelnen Ausführungsbeispielen möglich. So kann beim Ausführungsbeispiel gemäß Fig. 1 ebenfalls ein Gleitstein anstatt der Rolle 16 vorgesehen sein. Ferner ist es auch bei dem Ausführungsbeispielen gemäß Fig. 1 und 2 möglich, die Kurvenbahn 17 und/oder die Umfangsfläche der Rollen 16 oder 18 zu härten.

In Fig. 4 und 5 ist ein Teil eines Autotransporters, konkret eines Anhängers eines Autotransport-Gelenkzuges gezeigt, welcher einen Hubarm nach einen der vorstehend beschriebenen Ausführungsbeispiele aufweist. Der Anhänger weist einen unteren Rahmen 20 und eine obere Bühne 21 auf. Die Bühne 21 ist mittels des erfindungsgemäßen Hubarms auf den Rahmen 20 absenkbar und wieder anhebbar. Zu diesem Zweck ist der erfindungsgemäße Hubarm mittels der Welle 12 schwenkbar am Rahmen 20 gelagert.

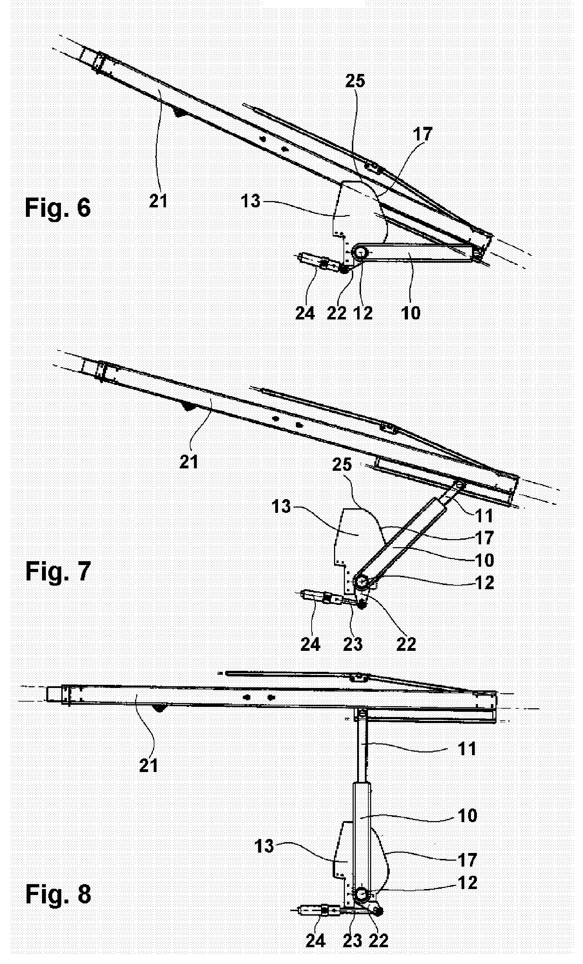

Fig. 6 zeigt den Hubarm gemäß einer der Fig. 1 bis 3 im zurückgeschwenktem Zustand. Wie bereits angedeutet, ist der Hubarm mittels der Welle 12 schwenkbar dem Rahmen 20 angeordnet. Die Welle 12 ist durchgehend ausgebildet und trägt an ihren äußeren Enden einen in Fahrtrichtung des Autotransporters gesehen linken und rechten Hubarm (Fig. 4, 5). An der Welle 12 ist ein Betätigungshebel 22 fest angebracht, beispielsweise angeschraubt oder angeschweißt. An den Betätigungshebel 22 ist eine Kolbenstange 23 eines Druckmittelzylinders 24 gelenkig angebracht. Mittels des Druckmittelzylinders 24 wird der Betätigungshebel 22 verschwenkt und hierdurch die Welle 12 um ihre Längsachse gedreht, was wiederum ein Verschwenken der Hubarme bewirkt. Gegebenenfalls können, wie in Fig. 4 und 5 gezeigt, auch mehrere Hydraulikzylinder 24 vorgesehen sein, wobei für jeden Hydraulikzylinder 24 ein eigener Betätigungshebel 22 vorgesehen ist.

Durch das Ausfahren der Kolbenstange 23 des Druckmittelzylinders 24 richtet sich der Hubarm 10 auf. In Fig. 7 ist eine teilweise aufgerichtete Position gezeigt. Infolge der Kurvenbahn 17 der Kurvenscheibe 13 fährt das ein- und ausfahrbare Hubelement 11 aus. Der Hubarm wird demnach teleskopartig verlängert. Beim Hubarm gemäß Fig. 1 rollt die Rolle 16 und beim Hubarm gemäß Fig. 2 die Rolle 18 auf der Kurvenbahn 17 ab. Beim Hubarm gemäß Fig. 3 gleitet der Gleitstein 19 auf der Kurvenbahn 17.

Die Kurvenbahn 17 weist einen oberen Todpunkt 25 auf. Sobald die Rolle 16 bzw. 18 oder der Gleitstein 19 diesen oberen Todpunkt 25 überschritten hat, fährt das ein- und ausfahrbare Hubelement 11 wieder leicht in das schwenkbare Hubelement 10 ein. Der Hubarm ist nun in seiner aufgerichteten Endstellung infolge Überschreitens des Todpunktes 22 arretiert (Fig. 8).

Wie anhand der Fig. 6 bis 8 zu erkennen ist, schwenkt aufgrund der äußeren Kontur (Kurvenbahn 17) der Kurvenscheibe 13 zunächst das untere Hubelement 10 nach oben, ohne daß dabei das andere Hubelement 11 nennenswert ein- und ausgefahren wird. Erst, nachdem die Schwenkbewegung bereits zu einem Großteil vollzogen ist, wird das andere Hubelement 11 aufgrund der Gestaltung der Kurvenscheibe 13 deutlich ausgefahren. Dieses hat eine günstige Krafteinleitung auf das Hubsystem zur Folge. In ganz oder teilweise abgesenkter Form ist der Hebelarm auf den Hubarm kurz gehalten, so daß sich eine geringe Hebelwirkung und damit eine Verringerung der vom Aufschwenken benötigten Kraft während des Anhebens der oberen Bühne 21 ergibt. Außerdem wirkt die fest angebrachte Kurvenscheibe 13 versteifend auf den Fahrzeugrahmen.

Je nach Größe des auf dem Autotransporters zu transportierenden Fahrzeugs ist es nicht immer möglich, die obere Bühne 21 in der vollständig nach oben gefahrenen Position, also mit vollständig aufgerichtetem Hubarm gemäß Fig. 8, zu benutzen. In der Praxis sind deshalb oft Zwischenstellungen erforderlich. Eine Möglichkeit hierfür besteht darin, Bremsbacken an die Kurvenscheibe anzulegen, welche kraftschlüssig arretieren. Der Vorteil besteht darin, daß jede beliebige Position eingenommen werden kann. Nachteilig ist, daß bei Verschleiß an den Bremsbacken eine zuverlässige Arretierung nicht immer gegeben ist. Eine formschlüssige Arretierung ist deshalb bevorzugt. Dieses kann beispielsweise durch Rastmittel erfolgen, in dem der Kurvenscheibe ein Zahnkranz zugeordnet wird, in dem ein Rastfinger, welcher dem Hubarm zugeordnet ist, formschlüssig eingreift. Ferner ist es möglich, die Kurvenscheibe als Rastmittel mit einem Lochraster zu versehen, in welchen ein Bolzen zum Arretieren eingreift, welcher wiederum den Hubarm zugeordnet ist. Weiterhin kann auch ein Riegel zwischen den beiden Hubelementen 10, 11 als Rastmittel vorgesehen sein. Der Bolzen, Riegel oder der Rastfinder können manuell vom Bediener bedient werden. Ferner ist eine automatische Bedienung mittels Hubmagneten oder, bevorzugt, da ohnehin am Autotransporter vorhanden, mittels Hydrauliköl bedient werden. Dabei sollte der Hubmagnet oder der Hydraulikzylinder so geschaltet sein, daß er in einer Ruheposition für eine eingerastete Position des Rastfingers, Riegels oder des Bolzens sorgt und diese löst, wenn er mit Druckmittel bzw. mit elektrischer Energie beaufschlagt wird.

### Bezugszeichenliste:

- 10: Hubelement
- 11: Hubelement
- 12: Welle
- 13: Kurvenscheibe
- 14: Achse
- 15: Schlitz
- 16: Rolle
- 17: Kurvenbahn
- 18: Rolle
- 19: Gleitstein
- 20: Rahmen
- 21: Bühne
- 22: Betätigungshebel
- 23: Kolbenstange
- 24: Druckmittelzylinder
- 25: Todpunkt

## Patentansprüche

1. Hubarm für ein Transportfahrzeug mit einer in ihrer Höhe und/oder Neigung verstellbaren Ladeebene (21), insbesondere Autotransportfahrzeug, mit wenigstens zwei verschieblich ineinander geführten Hubelementen (10, 11), wobei das eine Hubelement (10) schwenkbar an einer Basis (20) angebracht ist, **dadurch gekennzeichnet, daß** das andere Hubelement (11) aufgrund der Schwenkbewegung des einen Hubelementes (10) ein- und ausfahrbar ist.

2. Hubarm nach Anspruch 1, **dadurch gekennzeichnet, daß** das andere Hubelement (11) mittels einer Kurvenscheibe (13) aus dem einen Hubelement (10) ein- und ausfahrbar ist.

3. Haubarm nach Anspruch 1 oder 2, **dadurch gekennzeichnet, daß** das andere Hubelement (11) über einen oberen Todpunkt (25) ein- und ausfahrbar ist.

4. Hubarm nach Anspruch 1 oder 2, **dadurch gekennzeichnet, daß** das andere Hubelement (11) formschlüssig mittels eines Rastmittels in seiner jeweiligen Stellung arretierbar ist.

5. Transportfahrzeug, insbesondere Autotransportfahrzeug, mit einer mittels eines Hubarms in ihrer Höhe und/oder Neigung verstellbaren Ladeebene (21), wobei der Haubarm wenigstens zwei verschieblich ineinander geführte Hubelemente (10, 11) aufweist, von denen ein Hubelement (10) schwenkbar an einer Basis (20) und das andere Hubelement (11) an der Ladeebene (21) angebracht ist, **dadurch gekennzeichnet, daß** das andere Hubelement (11) aufgrund der Schwenkbewegung des einen Hubelementes (10) ein- und ausfahrbar ist.

6. Transportfahrzeug nach Anspruch 5, **dadurch gekennzeichnet, daß** das andere Hubelement (11) mittels einer Kurvenscheibe (13) aus dem einen Hubelement (10) ein- und ausfahrbar ist.

7. Transportfahrzeug nach Anspruch 5 oder 6, **dadurch gekennzeichnet, daß** das andere Hubelement (11) über einen oberen Todpunkt (25) ein- und ausfahrbar ist.

8. Transportfahrzeug nach Anspruch 5 oder 6, **dadurch gekennzeichnet, daß** das andere Hubelement (11) formschlüssig mittels eines Rastmittels in seiner jeweiligen Stellung arretierbar ist.
